Europäisches Patentamt

European Patent Office

Office européen des brevets

(19)

(11) Publication number: **0 012 454**
**B1**

(12) **EUROPEAN PATENT SPECIFICATION**

(45) Date of publication of patent specification: **13.07.83**

(51) Int. Cl.³: **B 62 M 9/12**

(21) Application number: **79200327.9**

(22) Date of filing: **21.06.79**

(54) A variable-speed bicycle and rear derailleur.

(30) Priority: **05.07.78 JP 82340/78**

(43) Date of publication of application:
**25.06.80 Bulletin 80/13**

(45) Publication of the grant of the patent:
**13.07.83 Bulletin 83/28**

(84) Designated Contracting States:
**DE FR GB IT**

(56) References cited:
**DE - B - 1 029 248**
**FR - A - 457 421**
**FR - A - 647 141**
**FR - A - 1 058 305**

(73) Proprietor: **MAEDA INDUSTRIES, LTD.**
**No. 1-16, 2-cho, Minami-koyo-cho**
**Sakai Osaka (JP)**

(72) Inventor: **Ozaki, Nobuo**
**No. 325, Higashi 3-chome Hamadera-**
**suwanomori-cho**
**Sakai, Osaka (JP)**

(74) Representative: **Frühbuss, Heinrich, Dr.rer.nat.**
**Franz-Fischer-Weg 61**
**D-4300 Essen 13 (DE)**

Courier Press, Leamington Spa, England

A variable-speed bicycle and rear derailleur.

This invention relates to a variable-speed bicycle equipped with a multi-stage freewheel assembly and a cooperating rear derailleur both housed within a gear case.

As is well known, a usual multi-stage freewheel assembly having four or more sprocket wheels is too large in dimension to be housed within a gear case of usual size. While, every type of conventional rear derailleur is also too large in dimension to be housed in a gear case of usual size because of difficulty in designing its chain shifting mechanism so compact and thin without decline of desired function. It is, of course, possible to provide such a large gear case as specially designed for housing both of the conventional multi-stage freewheel assembly and rear derailleur of large dimensions as disclosed for example in FR—A—1,058,305 having a gear case thickened at the rear portion for housing a multi-stage freewheel assembly and a rear derailleur. However, a bicycle equipped with that large gear case will surely lose its good appearance and will not sell well. Therefore, it has been customary that an actually available bicycle equipped with a rear derailleur is never provided with a full-cover type gear case, ignoring needs therefor arising, for example, from such viewpoints as prevention of exposure to rain and dust, and danger of catching a cyclist's clothing. The idea itself of housing a rear derailleur within a gear case is taught by the above-mentioned French patent, however, neither specific structure nor particular arrangement of the rear derailleur is disclosed in the French patent.

It is, therefore, a primary object of the present invention to provide a bicycle having a two or three-stage freewheel assembly and a rear derailleur both housed within a gear case.

Another object of the invention is to provide a specific construction of a rear derailleur capable of being housed within a gear case.

A further object of the invention is to provide a novel rear derailleur which is relatively simple in construction, compact in size, inexpensive to manufacture and efficient in use.

Other objects, features and advantages of the invention will become apparent from the detailed description given hereinafter in connection with the accompanying drawings.

In the drawings:

Figure 1 is a side elevation of a bicycle embodying the present invention;

Figure 2 is an enlarged side elevation showing the internal arrangements disposed within a gear case;

Figure 3 is a plan view of Figure 2, showing the derailleur in top gear position;

Figure 4 is a similar view to Figure 3, showing the derailleur in low gear position;

Figure 5 is an exploded perspective view showing important elements of the invention;

Figure 6 is an enlarged perspective view of a helical spring to be incorporated with the derailleur;

Figures 7 and 8 are cross sections of preferable wire materials of the helical spring as shown in Figure 6;

Figure 9 is a similar view to Figure 3, showing another embodiment of the present invention;

Figure 10 is a side elevation showing a further embodiment of the invention;

Figure 11 is a top plan view of Figure 10; and

Figure 12 is a rear side elevation of Figure 10.

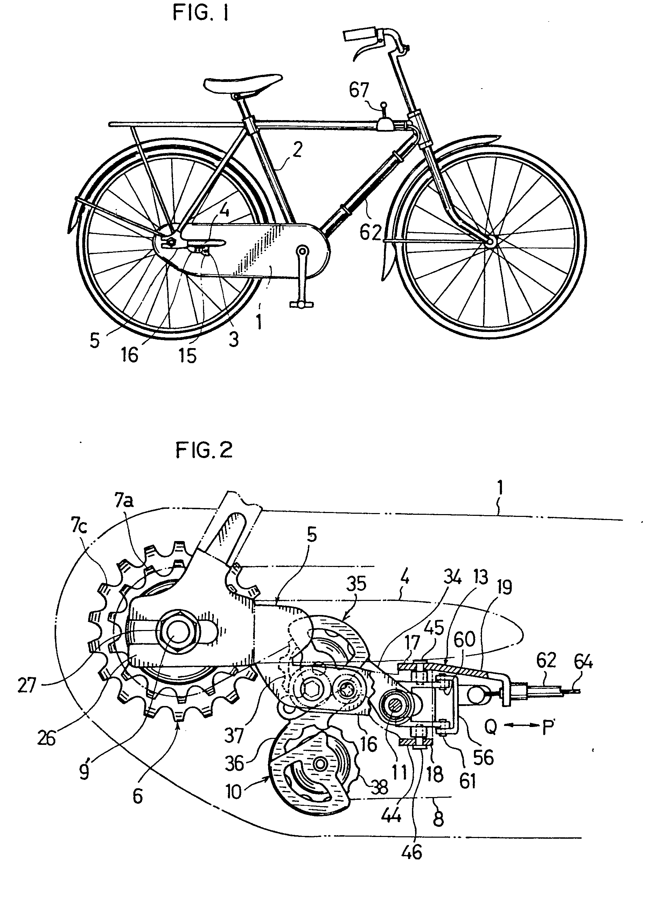

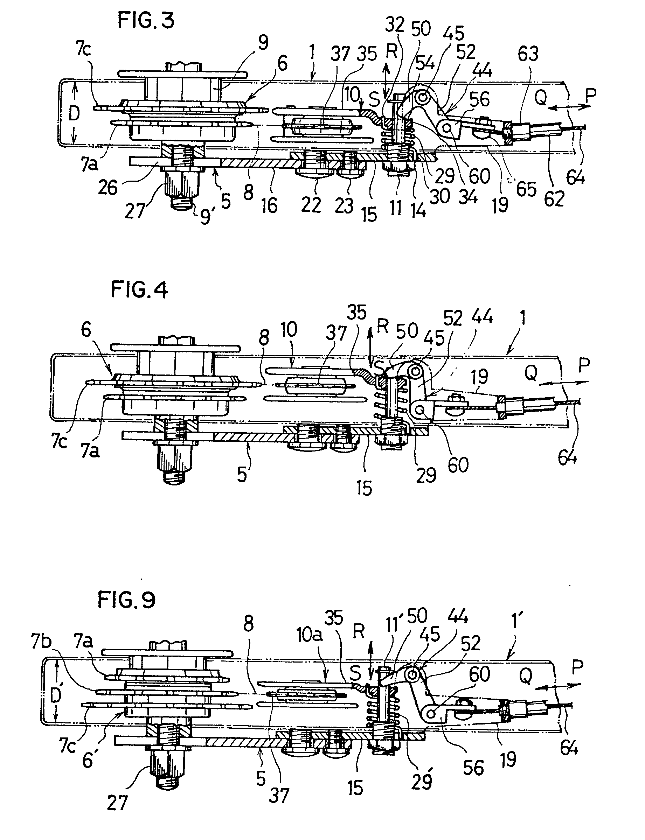

Referring now to the drawings, first in particular to Figures 1 to 8, a bicycle according to the present invention has a full-cover type gear case 1 mounted to one side of a bicycle frame 2, conventionally. The case 1 has a side opening 3 from which a part of a known chain stay 4, a rear end plate 5, and a part (side plate 15) of a derailleur mounting bracket 13 are exposed for permitting access thereto for adjustment and maintenance. The case 1 may be a one having a usual internal dimension (D) in Figure 3, the value of (D) usually being about 24mm.

Within the case 1 are disposed two-stage freewheel assembly 6 having a top gear sprocket 7a and a low gear sprocket 7c, and an endless chain 8 (shown in phantom line) engageable with the alternative of said sprockets 7a, 7c. The freewheel assembly 6 is conventionally mounted on a rear wheel hub 9 for coaxial rotation therewith. A rear derailleur 10 is also disposed within the case 1 so as to cooperate with the freewheel assembly 6.

The derailleur 10 has a support shaft 11 extending transversely of the longitudinal axis of the case 1, in other words, in parallel to a hub spindle 9'. The shaft 11 is rigidly secured at its threaded end section 12 to a mounting bracket 13 by means of a lock nut 14.

The bracket 13 includes a vertical side plate 15 exposed out of said opening 3 of the case 1 and supported by an extension 16 of the rear end plate 5. The bracket further includes a pair of vertically spaced support arms 17, 18 extending into the case 1 at right angles from said side plate 15, and a control tube support 19 extending transversely of the shaft 11. The support 19 may extend from any one of the arms 17, 18 or from said side plate 15. The bracket 13 is mounted to the extension 16 by means of usual bolts 22, 23 inserted into threaded holes 20, 21 formed in said plate 15 and fixing holes 24, 25 formed in said extension 16. The rear end plate 5 is fixedly mounted to the hub spindle 9' by means of a hook 26 and a clamp nut 27 as shown in Figures 2 to 4.

The side plate 15 has a further threaded hole 28 through which the support shaft 11 is inserted. The threaded section 12 of the shaft 11 is engaged with the hole 28 and clamped by the lock nut 14.

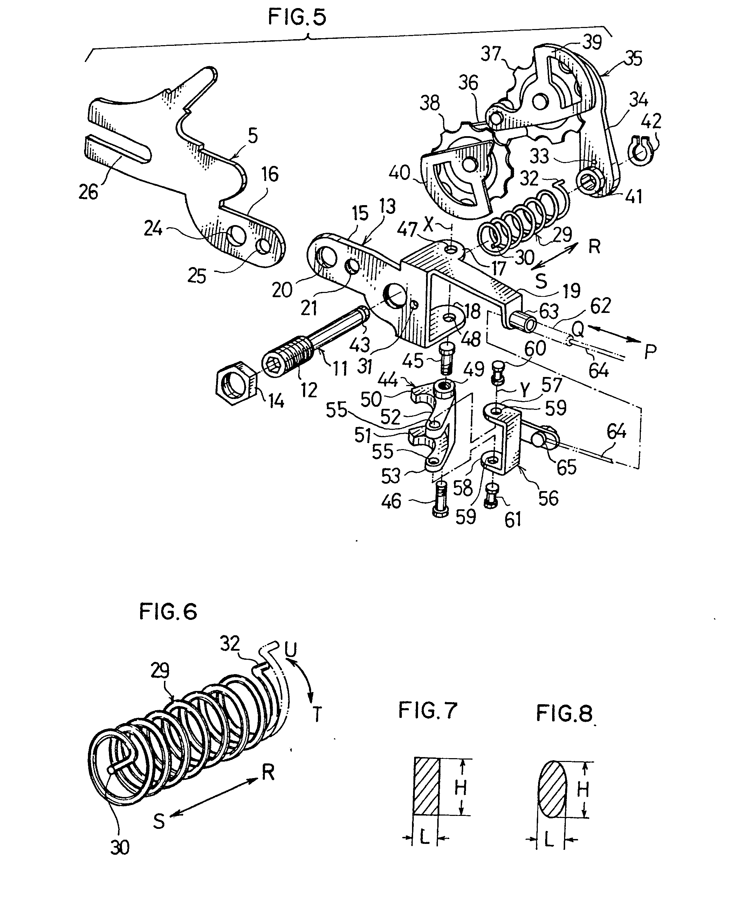

A helical spring 29 surrounds the shaft 11, with its stationary end 30 engaged with a retaining bore 31 formed in the side plate 15, while with its movable end 32 engaged with a retaining bore 33 formed in a swing arm 34 of a tensioner 35 which is pivotally and axially slidably mounted on the shaft 11. The spring 29 may be either a cylindrical helical spring as best shown in Figure 6 or a known conical helical spring (not shown). The spring 29 may preferably be a compression spring of left-handed fashion whose movable end 32 normally exerts such a torsional force in the direction T as shown in Figure 6. The spring may be circular in cross section as shown in Figure 6. More preferably, however, the spring may be rectangular or elliptical in cross section in which the vertical length (H) is larger than the horizontal length (L) as shown in Figures 7 and 8, so that said torsional force is more increased.

The tensioner 35 comprises the swing arm 34, a pulley support frame 36 formed integral with said arm 34, and a pair of pulleys 37, 38. The frame 36 includes a guide pulley guard 39 for rotatably supporting a guide pulley 37 and a tension pulley guard 40 for rotatably supporting a tension pulley 38. One end of the swing arm 34 may preferably be provided with a boss 41 for receiving the non-threaded end of the shaft 11, so that the tensioner 35 can be easily slidable axially back and forth on the shaft 11. The boss also assists the tensioner to rotate about the shaft 11.

The spring 29 is mounted on the shaft 11 so that it always exerts a resilient axial force in the direction R as will be hereinafter described in detail. After the spring 29 and the tensioner 35 have been mounted in position on the shaft 11, a usual snap ring 42 is fitted into an annular groove 43 formed in the non-threaded end of the shaft 11 which projects out of the tensioner 35, so that the tensioner is prevented from dislocation.

Between the pair of vertically spaced support arms 17, 18 is interposed an action converter 44 which converts a tension force of direction P into a thrust force of direction S. The converter is movable horizontally about a vertical axis X (Figure 5) common to a pair of hinge bolts 45, 46 each inserted into holes 47, 48 formed in the arms 17, 18 and a hole 49 formed in the converter, respectively. The converter 44 has a pair of vertically spaced push arms 50, 51 and a pair of vertically spaced connecting arms 52, 53 extending at suitable angles to said pair of push arms 50, 51.

The forward end portion of each of the push arms 50, 51 is operatively in contact with the external vertical wall surface 54 (Figure 3) of the swing arm 34. The pair of connecting arms 52, 53 each having a hole 55 is linked to a hinge member 56 which is provided with a pair of vertically spaced horizontal arms 57, 58 each having a hole 59 and interposed between the pair of connecting arms 52, 53 so as to freely rotate horizontally about a vertical axis Y (Figure 5) common to a pair of vertical hinge pins 60, 61 each inserted through the holes 55, 59.

One end of a known control tube 62 is rigidly connected to the free end of the support arm 19 by a usual fitting means 63, while one end of a known control cable 64 passing through said tube 62 is rigidly connected to the hinge member 56 through a usual clamping means 65 secured thereto.

In operation, when the cable 64 is pulled in the direction P by operating a known speed change lever 67 (Figure 1), the connecting arms 52, 53 of the converter are also pulled in the same direction. Simultaneously therewith, the tensioner 35 is pushed by the arms 50, 51 so as to slide axially on the shaft 11 in the direction S to take the top gear position of Figure 3, while the spring 29 is compressed with the result that, as a nature of a left-handed helical spring, its torsional force of direction T is increased so that the movable end 32 thereof can apply said force to the swing arm 34. Accordingly, the tensioner is pivotally moved clockwise about the shaft 11 to take the position of Figure 2, thereby to automatically maintain a desired chain tension.

On the other hand, when the cable 64 is loosened, the thrust force by the arms 50, 51 are removed, so that the spring 29, which has been compressed, is permitted to stretch axially to push the tensioner in the direction R to the low gear position of Figure 4. At this stage, the chain tension is increased because the sprocket 7c with which the chain is engaged is larger, whereby the tensioner is slightly shifted counterclockwise.

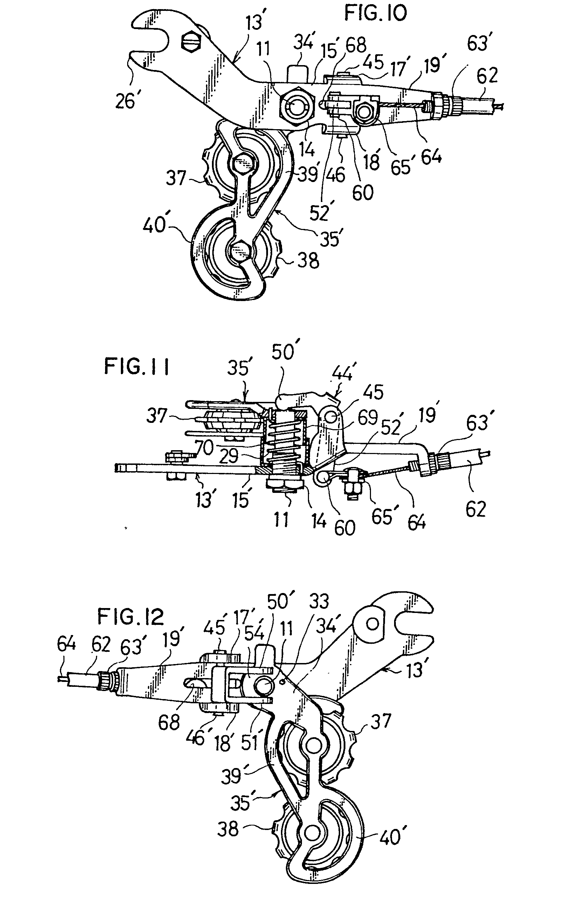

Figure 9 shows another embodiment of the invention wherein a three-stage freewheel assembly 6' and a rear derailleur 10a are disposed within a gear case 1'. The freewheel assembly 6' has three sprockets 7a, 7b, 7c among which the smallest one is a top gear, the intermediate one is a middle gear, and the largest one is a low gear. Further, the sprockets 7a, 7b, 7c are arranged in the reverse order, as will be apparent when comparing Figure 9 with Figures 3, 4. The derailleur 10a is so constructed that it takes the middle gear position when the cable 64 is half loosened or half pulled, as shown in Figure 9.

Thus, in operation, when the cable 64 is fully pulled in the direction P, the push arms 50, 51 push the tensioner 35 in the direction S, so that the chain 8 is switched over from the intermediate sprocket 7b onto the largest sprocket 7c, whereby the low gear position is obtained.

In contrast thereto, when the cable 64 is fully loosened, the push arms 50, 51 stop pushing the tensioner 35, resulting in that the spring 29' is free to stretch, urging the tensioner in the direction R. Simultaneously therewith, the chain 8 is switched over from the intermediate sprocket 7b onto the smallest sprocket 7a, whereby the top gear position is attained. Incidentally, it may be necessary to slightly increase the internal dimension (D') (Figure 9) of the gear case 1', since it should accommodate the three sprockets of freewheel assembly 6'. However, it will be easily understood that a slight increase in the dimension (D') will not lose a good appearance of the bicycle.

Figures 10 to 12 illustrate a further modification of the derailleur generally designated by reference numeral 10b, wherein a modified mounting bracket 13' is provided. The bracket 13' is a single piece of metal having a hook 26', a vertical side wall 15', a pair of vertically spaced support arms 17', 18', and a control tube support 19' extending from the side wall 15'. By means of the hook 26', the derailleur 10b can be fixedly mounted directly to the hub spindle 9'. As a result, the rear end plate 5 employed in the preceding embodiments is unnecessary. Apparently, the vertical wall 15' performs substantially the same function as the side plate 15 of the preceding embodiments. Functions of the support arms 17', 18' and the control tube support 19' are substantially the same as those of the arms 17, 18 and the support 19, respectively.

The pair of connecting arms 52, 53 in the preceding embodiments may be modified into a single piece of arm 52' as best shown in Figure 10. The connecting arm 52' is rigid at one end to the action converter 44', extends through a slot 68 formed in a wall of the bracket 13', and is pivotally supported at the other end by a hinge pin 60 to which the cable 64 is directly connected. Thus, in this embodiment, the hinge member 59 employed in the preceding embodiments may be dispensed with.

The shaft 11 and the spring 29 are disposed within a pair of cylindrical casings 69, 70 for dust-free purpose. One casing 69 is arranged in telescopical and rotatable relationship with respect to the other casing 70, so that the tensioner 35 is rotatable and axially slidable with the casing 69.

Various reference numerals with a dash ['] are used in Figures 10 to 12 to indicate the various elements which carry out substantially the same functions as those of the same or like elements already described in detail in the foregoing and indicated by identical reference numerals without dash. Thus, detailed description of each of such elements same as or similar to those corresponding elements already described in detail is omitted here.

The operation of the derailleur 10b shown in Figures 10 to 12 is substantially the same as that of the derailleur 10 shown in Figures 2 to 5. Further, the derailleur 10b may be modified so as to carry out the same function as that of the derailleur 10a shown in Figure 9.

## Claims

1. A variable-speed bicycle comprising two or three-stage freewheel assembly (6 or 6') with two or three sprockets (7a—7c or 7a—7b—7c) of different diameter mounted on a rear wheel hub (9) and housed within a gear case (1 or 1'); a rear derailleur (10 or 10a or 10b) housed within the gear case (1 or 1') and provided with a tensioner (35), a pulley support frame (36) and a pair of pulleys (37, 38) and adapted to cooperate with said free-wheel assembly for switching over a drive chain (8) from one sprocket to another when the tensioner (35) is shifted by operation from a remote location by means of a speed change lever (67) through a control cable (64); and a horizontal support shaft (11 or 11') disposed within said gear case and extending in parallel with a hub spindle (9') for supporting said derailleur; and at least one helical spring (29 or 29') surrounding said shaft and engaged at one end with the tensioner (35 or 35') mounted on said shaft, characterized in that the tensioner (35 or 35') is axially slidable on said shaft (11 or 11') as well as rotatable about said shaft under functions of said helical spring; and the bicycle further comprises an action converter (44 or 44') for converting a tension force of one direction P applied by said control cable (64) into a thrust force of a transverse direction S to said direction P of the tension force, said action converter having at least one push arm (50 or 50') disposed operatively in contact with said tensioner.

2. The bicycle according to Claim 1, wherein the horizontal support shaft (11) is supported by a mounting bracket (13) which is mounted to a rear end plate (5).

3. The bicycle according to Claim 1, wherein the horizontal support shaft (11) is supported by a mounting bracket (13') which is directly mounted to a rear wheel hub spindle (9').

4. The bicycle according to Claim 1, wherein the action converter (44) has at least one push arm (50) and at least one connecting arm (52) linked to a hinge member (56) to which a control cable (64) is connected.

5. The bicycle according to Claim 1, wherein the action converter (44') has at least one push arm (50') and at least one connecting arm (52') to which the control cable (64) is connected.

6. The bicycle according to Claims 2 or 3, wherein said action converter (44 or 44') is operatively supported by said mounting bracket (13 or 13').

7. The bicycle according to Claim 1, wherein the helical spring (29 or 29') is a compression spring whose movable end (32) is engaged with the tensioner (35 or 35') so as to urge said tensioner in the clockwise direction when viewed from one side of the bicycle where the gear case (1 or 1') is located.

8. The bicycle according to Claim 1, wherein said freewheel assembly (6) is arranged so that the chain (8) is engaged with the smaller sprocket (7a) when said helical spring (29) is fully compressed.

9. The bicycle according to Claim 1, wherein said freewheel assembly (6') is arranged so that the chain (8) is engaged with the largest sprocket (7c) when the helical spring (29') is fully compressed.

10. A bicycle rear derailleur comprising: a mounting bracket (13 or 13'); a horizontal support shaft (11 or 11') connected at a right angle to, and supported at one end by the bracket; and a tensioner (35 or 35') mounted on the support shaft, characterized in that, the tensioner (35 or 35') is resiliently axially slidable on the support shaft (11 or 11') as well as resiliently rotatable about the support shaft under function of at least one helical spring (29 or 29') surrounding the support shaft and interposed between the tensioner and the bracket (13 or 13'); and an action converter (44 or 44') having at least one push arm (50 or 50') is supported by the bracket for converting a given tension force into a thrust force acting upon the tensioner via the push arm.

## Revendications

1. Bicyclette à changement de vitesse comprenant un ensemble (6 ou 6') de roue libre à deux ou trois vitesses, avec deux ou trois couronnes (7a—7c ou 7a—7b—7c) de différents diamètres monté sur un moyeu de roue arrière (9) et logé dans un carter (1 ou 1'), un dérailleur arrière (10 ou 10a ou 10b) logé dans le carter (1 ou 1') et muni d'un tendeur (35), un cadre (36) support de galet et un paire de galets (37, 38) et conçu pour coopérer avec l'ensemble de roue libre pour faire sauter une chaîne (8) d'entraînement d'une couronne à une autre lorsque le tendeur (35) est déplacé en actionnant à distance un levier (67) de changement de vitesse par l'intermédiaire d'un câble (64) de commande, et un arbre de support horizontal (11 ou 11') disposé à l'intérieur du carter et s'étendant parallèlement à une tige (9') de moyeu pour supporter le dérailleur, et au moins un ressort hélicoïdal (29 ou 29'), entourant l'arbre et pris à une extrémité dans le tendeur (35 ou 35') monté sur l'arbre, caractérisée par le fait que le tendeur (35, ou 35') coulisse axialement sur l'arbre (11 ou 11') et tourne également autour dudit arbre sous l'action du ressort hélicoïdal, et la bicyclette comporte également un convertisseur d'action (44 ou 44') pour convertir une force de tension de sens P appliquée par le câble (64) de commande en une force de poussée de sens S transversal par rapport au sens P de la force de tension, ce convertisseur d'action ayant au moins un bras de poussée (50, ou 50') en contact opérationnel avec le tendeur.

2. Bicyclette selon la revendication 1, où l'arbre de support horizontal (11) est supporté par une ferrure (13) de montage qui est montée sur une plaque d'extrémité arrière (5).

3. Bicyclette selon la revendication 1, où l'arbre de support horizontal (11) est supporte par une ferrure (13') de montage qui est montée directement sur une tige (9') de moyeu de roue arrière.

4. Bicyclette selon la revendication 1, où le convertisseur d'action (44) a au moins un bras (50) de poussée et au moins un bras (52) de liaison relié à un élément (56) d'articulation auquel est relié un câble (64) de commande.

5. Bicyclette selon la revendication 1, où le convertisseur d'action (44') a au moins un bras (50') de poussée et au moins un bras (52') de liaison auquel est relié le câble de commande (64).

6. Bicyclette selon l'une des revendications 2 et 3, où le convertisseur d'action (44 ou 44') coopère avec la ferrure (13 ou 13') de montage qui le supporte.

7. Bicyclette selon la revendication 1, où le ressort hélicoïdal (29 ou 29') est un ressort à compression dont l'extrémité mobile (32) est prise dans le tendeur (35 ou 35') de manière à pousser le tendeur dans le sens horaire en regardant du côté de la bicyclette où se trouve le carter (1 ou 1').

8. Bicyclette selon la revendication 1, où l'ensemble de roue libre (6) est monté de telle manière que la chaîne (8) engrène avec la petite couronne (7a) lorsque le ressort hélicoïdal (29) est entièrement comprimé.

9. Bicyclette selon la revendication 1, où l'ensemble de roue libre (6') est monté de telle manière que la chaîne (8) engrène avec la plus grande couronne (7c) lorsque le ressort hélicoïdal (29') est entièrement comprimé.

10. Bicyclette à dérailleur arrière comprenant : une ferrure de montage (13 ou 13'); un arbre (11 ou 11') de support horizontal relié perpendiculairement à celle-ci, et supporté à une extrémité par la ferrure et un tendeur (35 ou 35') monté sur l'arbre de support, caractérisée par le fait que le tendeur (35 ou 35') coulisse axialement de manière élastique autour de l'arbre de support sous l'action d'au moins un ressort hélicoïdal (29 ou 29') entourant l'arbre de support et interposé entre le tendeur et la ferrure (13 ou 13'), et qu'un convertisseur d'action (44 ou 44') ayant au moins un bras de poussée (50 ou 50') est supporté par la ferrure pour convertir une force de tension donnée en une force de poussée agissant sur le tendeur par l'intermédiare du bras de poussée.

## Patentansprüche

1. Ein Fahrrad mit regelbarer Fahrgeschwindigkeit, mit zwei- oder dreistufigem Freilauf-Aggregat (6 oder 6'), zu dem zwei oder drei Kettensterne (7a—7c oder 7a—7b—7c) unterschiedlichen Durchmessers gehören, die auf einer Hinterradnabe (9) montiert und in einem Getriebegehäuse (1 oder 1') untergebracht sind; ferner ein im Getriebegehäuse (1 oder 1') untergebrachter, rückwärtiger Gleiter (10 oder 10a oder 10b), der mit einem Spanner (35), einem Rollenlagerrahmen (36) und einem Paar Rollen (37, 38) ausgestattet ist und in das genannte Freilaufaggregat in der Weise eingreifen kann, dass eine Antriebskette (8) von einem Kettenstern zum nächsten versetzt wird, wenn der Spanner (35) durch Betätigen eines Geschwindigkeitsreglerhebels (67) über ein Steuerkabel (64) verschoben wird; ferner eine horizontale Lagerwelle (11 oder 11'), die im Getriebegehäuse angeordnet ist und parallel zu einer Nabenachse (9') als Lagerung des Gleiters verläuft sowie mindestens eine Schraubenfeder (29 oder 29'), die um die genannte Welle liegt und mit einem Ende auf den auf dieser Welle montierten Spanner (35 oder 35') einwirkt, dadurch gekennzeichnet, dass der Spanner (35 oder 35') axial auf der Welle (11 oder 11') sowie rotierend um diese Welle gleitend montiert ist, wobei die Feder an der Rotation beteiligt ist, und dass zum Fahrrad ausserdem ein Kraftwandler (44 oder 44') gehört, der eine durch genanntes Steuerkabel (64) in einer Richtung P beaufschlagte Zugkraft in eine — in senkrechter Richtung zu P wirkende — Schubkraft S umwandeln kann, wobei der genannte Kraftwandler mit mindestens einem Schubarm (50 oder 50') ausgerüstet ist, welcher mit dem Spanner im Eingriff steht.

2. Fahrrad nach Anspruch 1, wobei die horizontale Lagerwelle (11) auf einer Montagehalterung (13) gelagert ist, die an einer rückwärtigen Endplatte (5) befestigt ist.

3. Fahrrad nach Anspruch 1, wobei die horizontale Lagerwelle (11) auf einer Montagehalterung (13') gelagert ist, die direkt an eine rückwärtige Radnabenachse (9') montiert ist.

4. Fahrrad nach Anspruch 1, wobei der Kraftwandler (44) mit mindestens einem Schubarm (50) und mindestens einem Verbindungsarm (52) ausgerüstet ist, der seinerseits an ein Scharnier (56) angelenkt ist, welches eine Verbindung mit einem Steuerkabel (64) aufweist.

5. Fahrrad nach Anspruch 1, wobei der Kraftwandler (44') mit mindestens einem Schubarm (50') und mindestens einem Verbindungsarm (52') ausgerüstet ist, mit dem wiederum das Steuerkabel (64) verbunden ist.

6. Fahrrad nach Anspruch 2 oder 3, wobei der Kraftwandler (44 oder 44') der genannten Montagehalterung (13 oder 13') aufliegt.

7. Fahrrad nach Anspruch 1, wobei es sich bei der Schraubenfeder (29 oder 29') um eine Druckfeder handelt, deren bewegliches Ende (32) auf den Spanner (35 oder 35') in einer Weise einwirkt, dass der Spanner — von der Seite des Fahrrads aus gesehen, wo das Getriebegehäuse (1 oder 1') sitzt — in Uhrzeigerichtung bewegt wird.

8. Fahrrad nach Anspruch 1, wobei das Freilaufaggregat (6) so montiert ist, dass die Kette (8) in den kleineren Kettenstern (7a) eingreift, wenn die Schraubenfeder (29) vollständig zusammengedrückt ist.

9. Fahrrad nach Anspruch 1, wobei das Freilaufaggregat (6') so montiert ist, dass die Kette (8) in den grössten Kettenstern (7c) eingreift, wenn die Schraubenfeder (29) vollständig zusammengedrückt ist.

10. Ein rückwärtiger Gleiter, bestehend aus einer Montagehalterung (13 oder 13'), einer im rechten Winkel mit der Halterung verbundenen und an einem Ende dieser aufliegenden horizontalen Lagerwelle (11 oder 11') sowie aus einem auf dieser Welle montierten Spanner (35 oder 35'), dadurch gekennzeichnet, dass der Spanner (35 oder 35') sowohl federnd axial auf der Lagerwelle (11 oder 11') als auch federnd rotierend um diese Welle gleiten kann, und zwar unter Beteiligung von mindestens einer Schraubenfeder (29 oder 29'), die um die Welle und zwischen Spanner und Halterung (13 oder 13') angeordnet ist, ferner bestehend aus einem Kraftwandler (44 oder 44'), der mit mindestens einem Schubarm (50 oder 50') ausgerüstet ist und der Halterung aufliegt und der eine gegebene Zugkraft durch Einwirkung auf den Spanner über den Schubarm in eine Schubkraft umwandelt.

FIG. I

FIG. 2

1

**FIG. 3**

**FIG. 4**

**FIG. 9**

## FIG.5

## FIG.6

## FIG.7

## FIG.8

0 012 454

FIG.10

FIG.11

FIG.12

4